# EUROPÄISCHE PATENTSCHRIFT

(11) **EP 3 423 988 B1**
(45) Veröffentlichungstag und Bekanntmachung des Hinweises auf die Patenterteilung: **17.08.2022**
(21) Anmeldenummer: 16710934.7
(22) Anmeldetag: 04.03.2016
(51) Int. Cl.: G06K 7/10, B65G 1/137, G06Q 10/08, G06Q 50/28

(54) **VERFAHREN ZUR TECHNISCHEN UNTERSTÜTZUNG EINES MANUELLEN KOMMISSIONIERVORGANGS**
METHOD FOR TECHNICALLY SUPPORTING A MANUAL ORDER PICKING PROCESS
PROCÉDÉ D'AIDE TECHNIQUE À UNE OPÉRATION MANUELLE DE PRÉPARATION DE COMMANDES

(43) Veröffentlichungstag der Anmeldung: 09.01.2019
(73) Patentinhaber: TeamViewer Germany GmbH, 73033 Göppingen (DE)
(72) Erfinder: WITT, Hendrik, 28279 Bremen (DE); JUNKER, Jan, 65189 Wiesbaden (DE)
(74) Vertreter: Fink Numrich Patentanwälte PartmbB
(86) Internationale Anmeldenummer: PCT/EP2016/054643
(87) Internationale Veröffentlichungsnummer: WO 2017/148532

(56) Entgegenhaltungen:
- EP-A1- 1 630 716
- US-A1- 2010 271 187
- US-A1- 2014 214 631
- US-A1- 2015 186 728
- US-A1- 2015 192 774
- US-B1- 7 504 949

## Beschreibung

Die Erfindung betrifft ein Verfahren und ein System zur technischen Unterstützung eines manuellen Kommissioniervorgangs.

Im Rahmen von manuellen Kommissioniervorgängen werden durch einen Benutzer bzw. Kommissionierer Objekte aus Lagerorten entnommen bzw. in Lagerorte abgelegt. Aus dem Stand der Technik sind dabei verschiedene Ansätzen bekannt, wie der Benutzer bei der Durchführung des manuellen Kommissioniervorgangs durch technische Einrichtungen unterstützt werden kann.

Bei einer Unterstützung eines Kommissioniervorgangs über Pick-by-Light wird über eine Anzeige an den Lagerorten der Objekte dem Kommissionierer angegeben, wieviel Objekte er vom Lagerort entnehmen muss oder darin ablegen muss. Die Entnahme bzw. Ablage wird durch den Kommissionierer am Lagerort z.B. über einen Tastendruck quittiert und die Bestandsänderung anschließend an ein Verwaltungssystem zurückgemeldet.

Bei einer Pick-by-Voice-Kommissionierung erhält der Kommissionierer über eine akustische Ausgabeeinrichtung Instruktionen zur Entnahme bzw. zum Ablegen von Objekten an Lagerorten.

Bei einer Kommissionierung basierend auf Pick-by-Vision werden dem Kommissionierer in seinem Blickfeld visuelle Informationen zum Kommissioniervorgang über ein auf dem Kopf getragenes visuelles Ausgabegerät angezeigt. Dieses Ausgabegerät wird häufig auch als Datenbrille bzw. HMD (HMD = Head-Mounted Display) bezeichnet. Mittels einer Sensorik in der Datenbrille, wie z.B. einer Kamera, wird die Umgebung des Kommissionierers erfasst. Hierüber lassen sich ggf. auch zu kommissionierende Objekte erkennen.

In der Druckschrift EP 2 161 219 B1 ist ein Verfahren zur visuellen Unterstützung von manuellen Kommissioniervorgängen beschrieben, bei dem der Kommissionierer eine mobile Einheit mit sich führt. Die mobile Einheit kommuniziert mit einer stationären EDV-Anlage und umfasst eine optische Anzeigevorrichtung sowie eine optosensorische Erfassungseinrichtung. Über die optosensorische Erfassungseinrichtung werden aktuelle Zielobjekte eines Kommissioniervorgangs erfasst. Über die Anzeigevorrichtung werden dem Kommissionierer Navigationsinformationen für das zu kommissionierende Zielobjekt angezeigt. In einer speziellen Ausführungsform ist die mobile Einheit eine Datenbrille.

Die Druckschrift US 2015/0192774 A1 offenbart ein Verfahren zur technischen Unterstützung eines manuellen Kommissioniervorgangs unter Verwendung einer Datenbrille gemäß den Merkmalen des Oberbegriffs des Anspruchs 1 und ein System mit den Merkmalen des Oberbegriffs des Anspruchs 16, wobei eine Sensoreinrichtung (Kamera) der Datenbrille Sensordaten erfasst, aus denen die erfolgte Ausführung eines jeweiligen Kommissionierschritts ermittelt wird.

In dem Dokument US 2014/0214631 A1 ist eine tragbare Vorrichtung beschrieben, die über ein Kommunikationsmodul zur Wechselwirkung mit RFID-Tags verfügt. Durch die tragbare Vorrichtung kann über das Auslesen eines RFID-Tags auf einem Gegenstand ermittelt werden, ob der Gegenstand einem gesuchten Gegenstand entspricht, der in einem Speicher der Vorrichtung hinterlegt ist. Entspricht der Gegenstand mit dem ausgelesenen RFID-Tag dem gesuchten Gegenstand, kann eine positive Rückmeldung optisch, akustisch oder haptisch an den Benutzer ausgegeben werden, der die Vorrichtung trägt. Ist dies nicht der Fall, kann eine entsprechende negative Rückmeldung an den Benutzer ausgegeben werden.

Kommissionierlösungen basierend auf Pick-by-Vision sind für den Kommissionierer äußerst komfortabel. Sie haben jedoch den Nachteil, dass zu kommissionierende Objekte aufgrund des Abstands der Datenbrille von den Objekten häufig nicht fehlerfrei erkannt werden.

Aufgabe der Erfindung ist es, ein Verfahren zur technischen Unterstützung eines manuellen Kommissioniervorgangs zu schaffen, welches besonders zuverlässig arbeitet.

Diese Aufgabe wird durch das Verfahren gemäß Patentanspruch 1 bzw. das System gemäß Patentanspruch 16 gelöst. Weiterbildungen der Erfindung sind in den abhängigen Ansprüchen definiert.

Das erfindungsgemäße Verfahren dient zur technischen Unterstützung eines manuellen Kommissioniervorgangs. Der Begriff des Kommissioniervorgangs ist dabei weit zu verstehen und kann die Kommissionierung (d.h. die Ablage und Entnahme) von Objekten in beliebigen Anwendungsgebieten, wie z.B. im Bereich der Logistik, Produktion, Wartung und Instandhaltung, betreffen.

Im Rahmen des manuellen Kommissioniervorgangs führt ein Benutzer bzw. Kommissionierer Kommissionierschritte aus, die dem Benutzer in der Form von Handlungsanweisungen ausgegeben werden. Die Handlungsanweisungen stammen von einem Verwaltungsserver zum Verwalten des manuellen Kommissioniervorgangs und sind dort als digitale Daten hinterlegt. Der Verwaltungsserver stellt in diesem Sinne einen zentralen Rechner dar, mit dem der manuelle Kommissioniervorgang des Benutzers und gegebenenfalls auch Kommissioniervorgänge von anderen Benutzern verwaltet werden. Vorzugsweise ist der Verwaltungsserver ein stationärer Rechner. Ein oder mehrere der obigen Kommissionierschritte spezifizieren jeweils die Entnahme von einem oder mehreren Objekten aus zumindest einem Lagerort durch den Benutzer. Alternativ oder zusätzlich spezifizieren ein oder mehrere Kommissionierschritte jeweils das Ablegen von einem oder mehreren Objekten an zumindest einem Lagerort durch den Benutzer.

Im Rahmen des erfindungsgemäßen Verfahrens erfasst eine Sensoreinrichtung und insbesondere eine kontaktlose Sensoreinrichtung in einer mobilen Einheit aus einer Anzahl von mobilen Einheiten Sensordaten. Die Anzahl von mobilen Einheiten kann ggf. auch nur eine einzelne mobile Einheit darstellen, welche dann die mobile Einheit ist, welche die Sensordaten erfasst. Aus den Sensordaten wird die erfolgte bzw. abgeschlossene Ausführung eines jeweiligen Kommissionierschritts ermittelt. Die Ermittlung einer erfolgten Ausführung eines jeweiligen Kommissionierschritts geschieht dabei dadurch, dass mittels der Sensordaten der Sensoreinrichtung bestimmt wird, dass und ggf. auch wie viele Objekte von einem entsprechenden Lagerort entnommen bzw. an diesem abgelegt werden. Der ermittelte ausgeführte Kommissionierschritt sollte der anstehende oder ggf. auch einer der anstehenden Kommissionierschritte gemäß der Handlungsanweisungen sein. Hierbei ist zu berücksichtigen, dass die Handlungsanweisungen dem Benutzer ggf. einen gewissen Freiraum lassen, in welcher Reichenfolge er eine bestimmte Anzahl von anstehenden Kommissionierschritten ausführen kann. Bei fehlerhafter Ausführung des Kommissionierschritts durch den Benutzer bzw. bei fehlerhaften Sensordaten kann der jeweilige Kommissionierschritt, dessen erfolgte Ausführung ermittelt wird, auch von dem entsprechenden anstehenden Kommissionierschritt abweichen.

Erfindungsgemäß wird eine jeweilige mobile Einheit der Anzahl von mobilen Einheiten über ein Befestigungsmittel der jeweiligen mobilen Einheit an einem Arm oder an einer Hand (vorzugsweise Handgelenk oder Handrücken) oder an einem Fuß oder an einem Bein des Benutzers getragen. Es können somit ein oder mehrere an Arm/Hand bzw. Fuß/Bein befestigte mobile Einheiten verwendet werden. Die mobilen Einheiten sind dabei bestimmungsgemäß dazu ausgelegt, an den genannten Extremitäten befestigt zu werden. Das Befestigungsmittel kann beliebig ausgestaltet sein und z.B. einen Verschluss oder ein Band umfassen. Gegebenenfalls kann das Befestigungsmittel ganz oder teilweise durch das Gehäuse der mobilen Einheit gebildet sein.

Im Rahmen des erfindungsgemäßen Verfahrens werden Daten, welche auf den Sensordaten der Sensoreinrichtung basieren, über eine drahtlose Datenschnittstelle der mobilen Einheit ausgesendet, woraufhin der Verwaltungsserver über die erfolgte Ausführung des jeweiligen Kommissionierschritts informiert wird. Trägt ein Benutzer mehrere mobile Einheiten, kann jede dieser Einheiten zur Erfassung der Sensordaten und zum Aussenden der Daten über die drahtlose Schnittstelle genutzt werden. Gegebenenfalls können die Sensoreinrichtungen bzw. die Datenschnittstellen in den einzelnen mobilen Einheiten dabei unterschiedlich ausgestaltet sein.

Erfindungsgemäß kann die erfolgte Ausführung eines jeweiligen Kommissionierschritts auf unterschiedlichen Komponenten ermittelt werden. In einer Variante wird die erfolgte Ausführung eines jeweiligen Kommissionierschritts unmittelbar in der mobilen Einheit ermittelt, welche auch die Sensordaten erfasst hat. In diesem Fall repräsentieren die ausgesendeten Daten, welche auf den Sensordaten der Sensoreinrichtung basieren, die Information über die erfolgte Ausführung des jeweiligen Kommissionierschritts. Diese Information kann nach jedem Kommissionierschritt übertragen werden, jedoch auch erst nach Durchführung mehrerer Kommissionierschritte. Allgemein können die Daten, welche auf den Sensordaten der Sensoreinrichtung basieren, nach jedem Kommissionierschritt bzw. gegebenenfalls auch erst nach der Durchführung von mehreren Kommissionierschritten über die drahtlose Schnittstelle ausgesendet werden.

Im Falle, dass die erfolgte Ausführung eines jeweiligen Kommissionierschritts nicht in der mobilen Einheit ermittelt wird, werden als Daten, welche auf den Sensordaten basieren, die Sensordaten selbst übermittelt. Diese können dann an den Verwaltungsserver weitergeleitet werden, der anhand der Daten die erfolgte Ausführung eines jeweiligen Kommissionierschritts feststellt.

Im erfindungsgemäßen Verfahren werden dem Benutzer ferner Informationen zum manuellen Kommissioniervorgang über eine Datenbrille zumindest teilweise visuell und optional auch akustisch und/oder taktil ausgegeben. Hier und im Folgenden ist der Begriff der Datenbrille als Synonym für eine am Kopf getragene visuelle Anzeigevorrichtung zu verstehen, wobei die Datenbrille optional gegebenenfalls auch akustische und/oder taktile Ausgabeeinheiten umfassen kann. Gegebenenfalls kann eine Datenbrille auch über eine oder zwei vom Benutzer getragenen Kontaktlinsen realisiert sein, über welche Informationen visuell dem Auge bzw. den Augen des Benutzers sichtbar gemacht werden. Erfindungsgemäß werden über die Datenbrille die Handlungsanweisungen ausgegeben, welche von dem Verwaltungsserver an die Datenbrille in der Form von digitalen Daten übermittelt werden. Vorzugsweise wird dabei die aktuell durchzuführende Handlungsanweisung gleichzeitig mit einer oder mehreren darauf folgenden Handlungsanweisungen ausgegeben. Zusätzlich können dem Benutzer die Handlungsanweisungen auch über einen Papierausdruck basierend auf den digitalen Daten im Verwaltungsserver ausgegeben werden. Erfindungsgemäß wird dem Benutzer über die Datenbrille ein Hinweis über die erfolgte Ausführung des jeweiligen Kommissionierschritts ausgegeben.

Das erfindungsgemäße Verfahren weist den Vorteil auf, dass eine zuverlässige Protokollierung von Kommissionierschritten eines Kommissioniervorgangs dadurch erreicht wird, dass entsprechende mobile Einheiten unmittelbar an den Extremitäten des Benutzers angeordnet sind. Da die Extremitäten häufig bei der Entnahme bzw. Ablage von Objekten durch den Benutzer beteiligt sind, kommen die mobilen Einheiten näher an die zu kommissionierenden Objekte, so dass die Fehlerquote bei der Identifikation von Kommissionierschritten geringer ist. Ferner ist ein erfindungswesentlicher Aspekt die Kombination von einer oder mehreren an Hand/Arm und/oder Fuß/Bein getragenen mobilen Einheiten mit einer Ausgabe von Informationen betreffend den Kommissioniervorgang über eine Datenbrille. Durch diese Kombination wird eine besonders komfortable und zuverlässige Unterstützung eines manuellen Kommissioniervorgangs erreicht.

Die drahtlose Datenschnittstelle der mobilen Einheit kann je nach Anwendungsfall unterschiedlich ausgestaltet sein. Insbesondere kann es sich um eine Bluetooth-Schnittstelle und/oder eine WiFi/WLAN-Schnittstelle und/oder eine Zigbee-Schnittstelle handeln. Falls die mobile Einheit mit einer weiteren, am Körper des Benutzers getragenen bzw. von ihm mitgeführten Vorrichtung (insbesondere mit der obigen Datenbrille) kommuniziert, wird vorzugsweise Bluetooth verwendet. Falls die mobile Einheit direkt mit dem Verwaltungsserver kommuniziert, ist die Datenschnittstelle vorzugsweise eine WiFi-Schnittstelle.

In einer besonders bevorzugten Ausführungsform werden dem Benutzer Informationen zum manuellen Kommissioniervorgang neben der Datenbrille über eine taktile Ausgabeeinheit und/oder akustische Ausgabeeinheit und/oder visuelle Ausgabeeinheit (z.B. ein Display) in zumindest einer vom Benutzer mitgeführten und nicht zur Datenbrille gehörigen Vorrichtung ausgegeben, insbesondere in zumindest einer mobilen Einheit der Anzahl von mobilen Einheiten. Diese mobile Einheit kann auch diejenige mobile Einheit sein, deren Sensoreinrichtung die Sensordaten erfasst.

Die Datenbrille kommuniziert in einer bevorzugten Variante drahtlos mit der mobilen Einheit, deren Sensoreinrichtung die Sensordaten umfasst, und/oder mit dem Verwaltungsserver. Die Kommunikation mit der mobilen Einheit erfolgt vorzugsweise über Bluetooth und die Kommunikation mit dem Verwaltungsserver vorzugsweise über WiFi. Über die drahtlose Kommunikation können z.B. die Sensordaten bzw. die Information über eine erfolgte Ausführung eines Kommissioniervorgangs sowie auch die Handlungsanweisungen übermittelt werden.

In einer weiteren Variante des erfindungsgemäßen Verfahrens werden dem Benutzer Informationen zum manuellen Kommissioniervorgang neben der Datenbrille über eine stationäre Ausgabeeinheit in der Umgebung des Benutzers ausgegeben. Insbesondere ist diese stationäre Ausgabeeinheit eine visuelle Ausgabeeinheit (z.B. ein Display). Vorzugsweise sind mehrere stationäre Ausgabeeinheiten in dem räumlichen Bereich angeordnet, in dem der Kommissioniervorgang stattfindet. Auf der Ausgabeeinheit, deren Ausgabe für den Benutzer in seiner aktuellen Position wahrnehmbar ist, werden dann die entsprechenden Informationen über den manuellen Kommissioniervorgang ausgegeben.

In einer besonders bevorzugten Ausführungsform umfasst die Anzahl von mobilen Einheiten zumindest eine mobile Einheit, die an einem Handgelenk des Benutzers befestigt ist, und/oder zumindest eine mobile Einheit, die an einem Fußgelenk des Benutzers befestigt ist. Hierdurch wird ein besonders hoher Tragekomfort für den Benutzer gewährleistet.

In einer weiteren bevorzugten Ausführungsform des erfindungsgemäßen Verfahrens übermittelt die mobile Einheit, deren Sensoreinrichtung die Sensordaten erfasst, die Daten, welche auf den Sensordaten der Sensoreinrichtung basieren, direkt unter Zwischenschaltung der drahtlosen Datenschnittstelle an den Verwaltungsserver. Alternativ oder zusätzlich übermittelt die mobile Einheit, deren Sensoreinrichtung die Sensordaten erfasst, die Daten, welche auf den Sensordaten der Sensoreinrichtung basieren, unter Zwischenschaltung der drahtlosen Schnittstelle zunächst an eine vom Benutzer getragene Vorrichtung (vorzugsweise die oben definierte Datenbrille), welche anschließend Informationen an den Verwaltungsserver übermittelt, basierend auf denen der Verwaltungsserver über die erfolgte Ausführung des jeweiligen Kommissionierschritts informiert wird.

In einer weiteren Ausführungsform des erfindungsgemäßen Verfahrens umfasst die Sensoreinrichtung der mobilen Einheit ein Lesegerät, welches als Sensordaten kontaktlos einen Code an dem oder den zu entnehmenden oder abzulegenden Objekten oder am Ort der Entnahme oder Ablage des oder der zu entnehmenden oder abzulegenden Objekte erfasst bzw. ausliest. In einer Variante ist das Lesegerät ein Transponder-Lesegerät, das den Code aus einem RFID-Transponder und vorzugsweise einem passiven RFID-Transponder ausliest. Alternativ kann das Lesegerät auch ein optisches Lesegerät (insbesondere eine Kamera) sein, welches einen visuellen Code ausliest, wie z.B. ein Lesegerät zum Auslesen eines Barcodes oder QR-Codes. Mit der soeben beschriebenen Variante der Erfindung wird eine hohe Zuverlässigkeit der Erkennung von ausgeführten Kommissionierschritten erreicht.

In einer weiteren Variante des erfindungsgemäßen Verfahrens umfasst die Sensoreinrichtung der mobilen Einheit eine Einrichtung, welche als Sensordaten eine Anzahl von Merkmalen, insbesondere umfassend die Kontur und vorzugsweise die 3D-Kontur, des oder der zu entnehmenden oder abzulegenden Objekte oder des Lagerorts der Entnahme oder der Ablage des oder der zu entnehmenden oder abzulegenden Objekte erfasst, wobei die Einrichtung vorzugsweise eine Kamera, wie z.B. eine Tiefensensor- und/oder Infrarotsensorkamera, ist.

In einer weiteren bevorzugten Ausführungsform des erfindungsgemäßen Verfahrens umfasst die Sensoreinrichtung eine inertiale Messeinheit und/oder eine optosensorische Messeinheit (vorzugsweise eine Kamera, z.B. eine Wärmebildkamera/Infrarotkamera) und/oder einen Sensor zur Ortung über ein Funknetz (z.B. über ein lokales Funknetz und insbesondere über WLAN) und/oder einen Sensor zur satellitengestützten Ortung (z.B. basierend auf GPS oder GLONASS oder Galileo). Dabei wird aus den Sensordaten der inertialen Messeinheit und/oder der optosensorischen Messeinheit und/oder des Sensors zur Ortung über ein Funknetz und/oder des Sensors zur satellitengestützten Ortung durch Abgleich mit einem digitalen Modell die erfolgte Ausführung des jeweiligen Kommissionierschritts ermittelt, wobei das digitale Modell die räumlichen Positionen von Lagerorten für Objekte in dem räumlichen Bereich spezifiziert, in dem der Kommissioniervorgang stattfindet. Diese Variante der Erfindung hat den Vorteil, dass sie mit geringem logistischem Aufwand einhergeht, da keine Codes oder Transponder an den Objekten bzw. deren Lagerorten angebracht werden müssen. Die oben genannte inertiale Messeinheit ist eine Einrichtung, welche ein oder mehrere Gyroskope und/oder ein oder mehrere Beschleunigungssensoren und vorzugsweise auch einen Kompass umfasst. Solche Messeinheiten sind an sich aus dem Stand der Technik bekannt.

In einer weiteren Variante des erfindungsgemäßen Verfahrens wird erfasst, wenn eine erfolgte Ausführung eines jeweiligen Kommissionierschritts nicht mit dem anstehenden Kommissionierschritt oder einem der anstehenden Kommissionierschritte gemäß den digitalen Daten der Handlungsanweisungen übereinstimmt, woraufhin ein oder mehrere vorbestimmte Aktionen durchgeführt werden. Vorzugsweise wird dem Benutzer eine Warnmeldung über ein Ausgabemittel ausgegeben wird. Dieses Ausgabemittel kann dem oben beschriebenen Ausgabemittel entsprechen.

In einer weiteren Variante des erfindungsgemäßen Verfahrens werden mittels einer Detektionseinrichtung in einer mobilen Einheit der Anzahl von mobilen Einheiten, insbesondere in der mobilen Einheit, deren Sensoreinrichtung die Sensordaten erfasst, Informationen betreffend die Bewegung und/oder Beschleunigung der mobilen Einheit, deren Sensoreinrichtung die Sensordaten erfasst, und/oder Informationen aus der Umgebung dieser mobilen Einheit detektiert. Die Detektionseinrichtung stellt somit eine zusätzliche Sensoreinrichtung dar. In einer bevorzugten Ausführungsform umfasst die Detektionseinrichtung eine inertiale Messeinheit und/oder einen Schrittzähler und/oder einen Temperatursensor und/oder einen Luftfeuchtigkeitssensor und/oder einen Luftdrucksensor und/oder einen Lichtsensor zur Erfassung der Lichthelligkeit und/oder einen Sensor zur Ortung über ein Funknetz und/oder einen Sensor zur satellitengestützten Ortung und/oder eine Kamera (z.B. Wärmebildkamera/Infrarotkamera).

In einer Ausführungsform der Erfindung wird mittels der detektierten Informationen der Detektionseinrichtung ermittelt, wenn der Abstand zwischen der mobilen Einheit, deren Sensoreinrichtung die Sensordaten erfasst, und dem Lagerort des anstehenden Kommissionierschritts gemäß den digitalen Daten der Handlungsanweisungen geringer als eine vorbestimmte Schwelle ist, wobei die Sensoreinrichtung immer nur für den Zeitraum aktiviert wird, solange dieser Abstand unter der vorbestimmten Schwelle bleibt. Hierdurch werden Fehldetektionen von Lagerorten vermieden, an denen keine Objekte abgelegt oder entnommen werden.

In einer weiteren Ausführungsform der Erfindung wird aus den detektierten Informationen der Detektionseinrichtung der Abstand zwischen der mobilen Einheit, deren Sensoreinrichtung die Sensordaten erfasst, und dem Lagerort des anstehenden Kommissionierschritts gemäß den digitalen Daten der Handlungsanweisungen bestimmt und in Abhängigkeit von diesem Abstand die Reichweite der Sensoreinrichtung, welche eine kontaktlose Sensoreinrichtung ist, verändert. Vorzugsweise wird die Reichweite in einem vorgegebenen Wertebereich des Abstands bei abnehmendem Abstand herabgesetzt. Hierdurch wird eine zuverlässige Ermittlung von Kommissionierschritten erreicht.

Neben dem oben beschriebenen Verfahren betrifft die Erfindung ein System zur technischen Unterstützung eines manuellen Kommissioniervorgangs, nach Anspruch 16.

Das erfindungsgemäße System ist vorzugsweise zur Durchführung einer oder mehrerer bevorzugter Varianten des erfindungsgemäßen Verfahrens eingerichtet.

Eine nicht zur Erfindung gehörige Variante betrifft eine mobile Einheit, umfassend eine Sensoreinrichtung und ein Befestigungsmittel zur Befestigung der mobilen Einheit an einem Arm und/oder an einer Hand und/oder an einem Fuß und/oder an einem Bein eines Benutzers, wobei die mobile Einheit zur Verwendung in dem erfindungsgemäßen Verfahren bzw. einer oder mehrerer bevorzugter Ausführungsformen des erfindungsgemäßen Verfahrens einrichtet ist. Mit anderen Worten enthält die mobile Einheit entsprechende Mittel zur Durchführung des erfindungsgemäßen Verfahrens bzw. bevorzugter Varianten des erfindungsgemäßen Verfahrens, sofern die entsprechenden Varianten Funktionen der mobilen Einheit betreffen.

Ausführungsbeispiele der Erfindung werden nachfolgend anhand der beigefügten Figuren detailliert beschrieben.

Es zeigen:
- Fig. 1: eine schematische Darstellung eines Systems zur Durchführung einer Ausführungsform des erfindungsgemäßen Verfahrens;
- Fig. 2: eine schematische Darstellung der Komponenten eines Sensorarmbands, welches in einer Variante des erfindungsgemäßen Verfahrens eingesetzt wird; und
- Fig. 3 und Fig. 4: perspektivische Darstellungen, welche den äußeren Aufbau von zwei Ausführungsformen eines Sensorarmbands zeigen, die im erfindungsgemäßen Verfahren verwendet werden können.

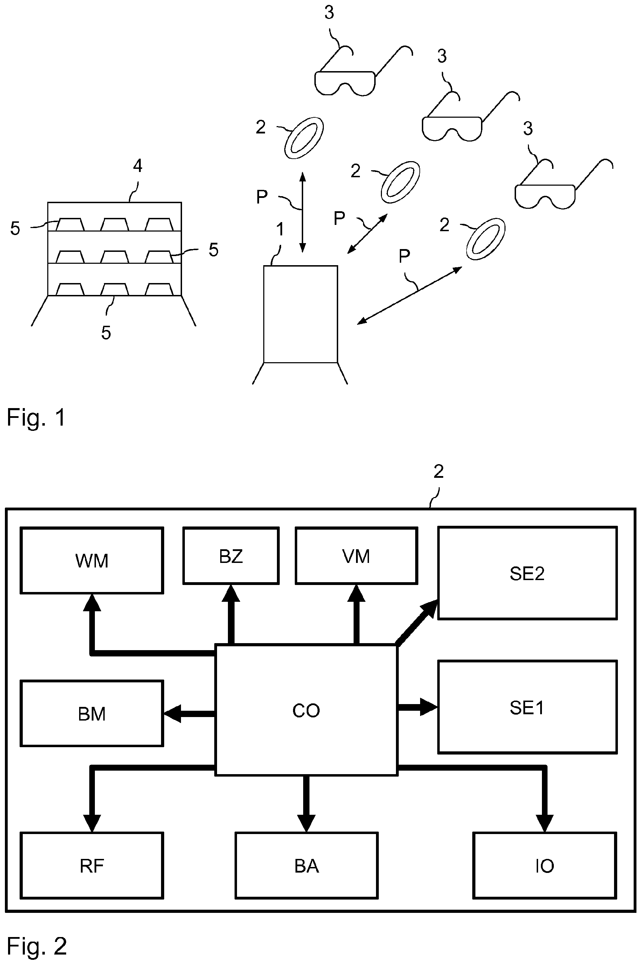

Fig. 1 zeigt schematisch ein System, mit dem eine Variante des erfindungsgemäßen Verfahrens durchgeführt wird. Das System umfasst einen zentralen Server 1, der zur Verwaltung von Kommissioniervorgängen dient, die über mehrere Benutzer in einem vorbestimmten räumlichen Bereich, wie z.B. einer Lagerhalle, ausgeführt werden können. Jeder der Benutzer trägt hierzu am Handgelenk eine mobile Einheit in der Form eines Sensorarmbands 2, welches lediglich schematisch angedeutet ist. Fig. 2 bis Fig. 4 zeigen im Detail mögliche Ausgestaltungen des Sensorarmbands. Ferner trägt jeder der Benutzer eine Datenbrille 3, über die ihm visuelle Informationen zu dem von ihm durchgeführten Kommissioniervorgang über eine Projektion angezeigt werden. In Fig. 1 sind drei Sensorarmbänder bzw. Datenbrillen gezeigt, d.h. drei Benutzer führen gerade Kommissioniervorgänge durch. Diese Anzahl ist lediglich beispielhaft und es kann auch eine wesentlich größere Anzahl an Benutzern einen entsprechenden Kommissioniervorgang durchführen.

Im Rahmen der einzelnen Kommissioniervorgänge kommuniziert sowohl das Sensorarmband 2 als auch die Datenbrille 3 mit dem Verwaltungsserver 1, wie durch Doppelpfeile P angedeutet ist. Im hier beschriebenen Ausführungsbeispiel erfolgt die Kommunikation zwischen Sensorarmband 2 und Verwaltungsserver 1 mittels WiFi. Ebenso kommunizieren die einzelnen Datenbrillen 3 über WiFi mit dem Server 1. Alternativ besteht jedoch auch die Möglichkeit, dass die einzelnen Sensorarmbänder z.B. über Bluetooth mit den Datenbrillen des entsprechenden Benutzers kommunizieren und die Datenbrillen wiederum mit dem Verwaltungsserver in Kommunikationsverbindung stehen.

Die Informationen zu den einzelnen durchzuführenden Kommissioniervorgängen sind auf dem Verwaltungsserver 1 hinterlegt und werden von diesem in der Form von Handlungsanweisungen an die einzelnen Datenbrillen 3 der Benutzer übertragen. Jede Handlungsanweisung betrifft dabei einen auszuführenden Kommissionierschritt, gemäß dem der Benutzer bestimmte Objekte 5 aus einem Regal 4 entnehmen bzw. darin ablegen soll. Je nach Ausgestaltung können alle Kommissionierschritte zu Beginn des Kommissioniervorgangs an die Datenbrille 3 übertragen werden. Ebenso können nur einige der Kommissionierschritte bzw. einzelne Kommissionierschritte sukzessive übermittelt werden, wenn vorangegangene Kommissionierschritte durchgeführt wurden.

Ein wesentlicher Aspekt des hier beschriebenen Systems besteht darin, dass mittels der vom Benutzer getragenen Sensorarmbänder 2 die Durchführung der Kommissionierschritte erfasst wird. Hierfür ist in der hier beschriebenen Ausführungsform ein Lesegerät RF (siehe Fig. 2) in dem Sensorarmband 2 integriert. Mit diesem Lesegerät werden entsprechende RFID-Transponder an den am entsprechenden Lagerort abzulegenden bzw. zu entnehmenden Objekten erkannt, wenn sich der Benutzer mit seiner Hand den Objekten nähert. Es kann somit die erfolgte Durchführung eines Kommissionierschritts basierend auf der erkannten Anzahl an entnommenen bzw. abgelegten Objekten festgestellt werden. Insbesondere kann auch ermittelt werden, ob der durchgeführte Kommissionierschritt mit der durch die Datenbrille angezeigten Handlungsanweisung übereinstimmt. Wird vom Sensorarmband 2 erkannt, dass ein Kommissionierschritt ordnungsgemäß entsprechend der Handlungsanweisung durchgeführt wurde, gibt dieses Armband drahtlos eine Meldung über die ordnungsgemäße Durchführung des Kommissionierschritts an den Server 1. Zusätzlich kann auch eine Meldung an den Benutzer über eine Ausgabeeinheit im Sensorarmband 2 bzw. über die Datenbrille 3 erfolgen.

Die Erfassung der einzelnen Kommissionierschritte kann gegebenenfalls auch über einen einzelnen RFID-Transponder an einem jeweiligen Lagerort erreicht werden. Es wird dabei davon ausgegangen, dass der Benutzer bei Erfassung des Transponders am Lagerort auch tatsächlich die geforderte Anzahl an Objekten gemäß der Handlungsanweisung entnimmt bzw. ablegt. Alternativ können die Kommissionierschritte auch in einzelne Schritte zur Entnahme bzw. Ablage von lediglich einem Objekt aufgeteilt sein.

Die Überwachung eines Kommissioniervorgangs über am Handgelenk getragene Sensorarmbänder weist den großen Vorteil auf, dass hierdurch sehr genau und mit geringer Fehlerquote die einzelnen Kommissionierschritte detektiert werden können. Gegebenenfalls kann der Benutzer dabei auch zwei Sensorarmbänder an beiden Handgelenken und bedarfsweise auch ein oder mehrere Sensorarmbänder an seinen Fußgelenken tragen. Auf diese Weise wird die Fehlerrate bei der Erfassung der Kommissionierschritte weiter verringert, da mehr Einheiten zur Erfassung der Kommissionierschritte zur Verfügung stehen.

Wie bereits erwähnt, wird die ordnungsgemäße Ausführung eines Kommissionierschritts an den zentralen Verwaltungsserver 1 gemeldet. Ebenso wird ein fehlerhaft durchgeführter Kommissionierschritt, z.B. die Ablage bzw. Entnahme von falschen oder zu vielen bzw. zu wenigen Objekten, an der Verwaltungsserver 1 gemeldet. Ferner bekommt der Benutzer eine Rückmeldung über einen fehlerhaften Kommissionierschritt mittels einer Signalisierung am Sensorarmband und/oder an der Datenbrille. Die Signalisierung kann optisch, akustisch oder über Vibrationen erfolgen. Auch sind andere Signalisierungsformen, wie z.B. leichte Stromreize, denkbar.

Das Sensorarmband 2 umfasst neben dem RFID-Lesegerät RF weitere Sensoren SE1 und SE2, die weiter unten anhand von Fig. 2 näher erläutert werden. In einer Variante wird auf Basis von Ortsinformation und/oder entsprechender Beschleunigungswerte der weiteren Sensoren ermittelt, ob sich das Sensorarmband bzw. der Benutzer in der Nähe des Lagerorts befindet, an dem der nächste Kommissionierschritt zu erfolgen hat. Nur wenn dies der Fall ist, wird das RFID-Lesegerät aktiviert. Ansonsten bleibt das Gerät deaktiviert. Auf diese Weise können Fehllesungen von RFID-Transpondern verhindert werden. Allgemein können über Sensordaten weiterer Sensoren Rückschlüsse auf den Aufenthaltsort bzw. die Tätigkeit des Benutzers (z.B. Kommissionieren, Laufen, Stehen, Beugen oder dergleichen) gezogen werden.

Fig. 2 zeigt schematisch eine Ausgestaltung des in Fig. 1 gezeigten Sensorarmbands. Das Sensorarmband umfasst eine Mikroprozessoreinheit in der Form eines Controllers CO, der über verschiedene, durch Pfeile angedeutete Schnittstellen an Komponenten des Sensorarmbands 2 gekoppelt ist. Im Besonderen ist der Controller CO über eine serielle Schnittstelle an das RFID-Lesegerät RF gekoppelt, über welches die Anwesenheit von RFID-Transpondern zur Erfassung der einzelnen Kommissionierschritte detektiert wird. Ferner weist der Controller CO eine SPI-Schnittstelle zu einem Bluetooth-Modul BM auf, über das das Sensorarmband mit der Datenbrille 3 kommunizieren kann. Ferner ist der Controller CO über eine serielle Schnittstelle mit einem WiFi-Modul WM verbunden, über das eine drahtlose Kommunikation mit dem Verwaltungsserver 1 erfolgen kann. Darüber hinaus umfasst der Controller CO einen Summer BZ und einen Vibrationsmotor VM, die über digitale Schnittstellen mit dem Controller CO gekoppelt sind. Hierüber werden dem Benutzer Hinweise zum Kommissioniervorgang, wie z.B. Warnmeldungen bei einem falsch ausgeführten Kommissionierschritt, ausgegeben. Darüber hinaus ist der Controller CO über eine digitale Schnittstelle an Ein-/Ausgänge IO gekoppelt, um hierüber mit einer LED und mit Bedienknöpfen am Gehäuse des Sensorarmbands zu kommunizieren.

Darüber hinaus umfasst das Sensorarmband 2 die bereits oben erwähnten weiteren Sensoren SE1 und SE2. Je nach Variante des Sensorarmbands können unterschiedliche Arten von weiteren Sensoren vorgesehen sein. Insbesondere kann der Sensor SE1 eine inertiale Messeinheit und/oder einen Schrittzähler und/oder einen Barcode-Scanner umfassen. Die Sensoren SE2 können z.B. einen Temperatursensor und/oder einen Luftfeuchtigkeitssensor und/oder einen Luftdrucksensor und/oder einen Lichtsensor zur Helligkeitsdetektion umfassen. Die Sensoren SE1 und SE2 können über unterschiedliche Schnittstellen an den Controller CO gekoppelt sein, z.B. über eine analoge Schnittstelle, eine digitale Schnittstelle, eine serielle Schnittstelle, eine SPI-Schnittstelle und dergleichen. Das Sensorarmband 2 umfasst ferner eine Batterie BA mit einer entsprechenden Ladeelektronik, die ebenfalls an dem Controller CO angebunden ist.

Zur Erhöhung der Kommissioniergeschwindigkeit kann im Rahmen des Kommissioniervorgangs ferner eine eindeutige Darstellung des zu kommissionierenden Guts auf der Datenbrille 3 oder einem anderen, vom Benutzer mitgeführten Anzeigegerät erfolgen. Die Darstellung zeigt dabei eine Abbildung des Guts und/oder eine eindeutige alphanummerische Zeichenfolge zur Bezeichnung des Guts (z.B. Artikelnummer) sowie dessen zu entnehmende bzw. abzulegende Stückzahl. Vorzugsweise ist der zentrale Verwaltungsserver 1 in der Lage, die graphische Ausgabe an das verwendete Anzeigegerät anzupassen, so dass dort eine für das Anzeigegerät optimierte Darstellung erfolgt. Im Falle einer Sprachausgabe erfolgt eine akustische Ausgabe, welche das zu entnehmende bzw. abzulegende Gut sowie dessen Stückzahl anzeigt.

In einer weiteren Variante kann auf der Datenbrille 3 sowohl die Position des aktuell zu entnehmenden Guts als auch die Position des nächsten zu entnehmende Gut dargestellt werden. Der Benutzer erhält dadurch z.B. die Möglichkeit, einen im Kommissionierprozess notwendigen Kommissionierwagen, auf dem die Waren zu einem Kommissioniervorgang gesammelt werden, zwischen zwei Entnahmestandorten zu platzieren und somit den Handhabungsaufwand und Laufwege zu verringern.

Zu Beginn eines Kommissioniervorgangs legt der Benutzer bzw. Kommissionierer das oder die Sensorarmbänder 2 an und identifiziert sich an dem System. Dies kann z.B. über einen mitarbeiterspezifischen RFID-Transponder oder über eine Tastenfolge erfolgen, die der Benutzer auf physischen Tasten an einem mobilen Gerät, insbesondere gegebenenfalls auch an einem angelegten Sensorarmband, eingeben kann. Alternativ kann die Eingabe der Tastenfolge über virtuelle Tasten erfolgen, die z.B. auf der Datenbrille oder einem anderen mobilen Gerät eingeblendet werden. Im Falle von virtuellen Tasten, die auf einer Datenbrille angezeigt werden, kann die entsprechende Tasteneingabe z.B. über Gesten ausgelöst werden. In diesem Falle ist neben der Datenbrille auch die Erfassung von Gesten mittels entsprechender Sensorik erforderlich.

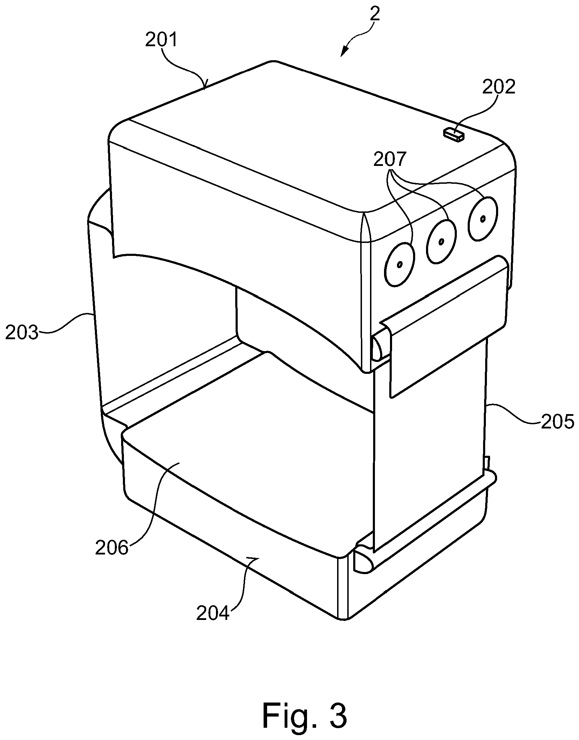

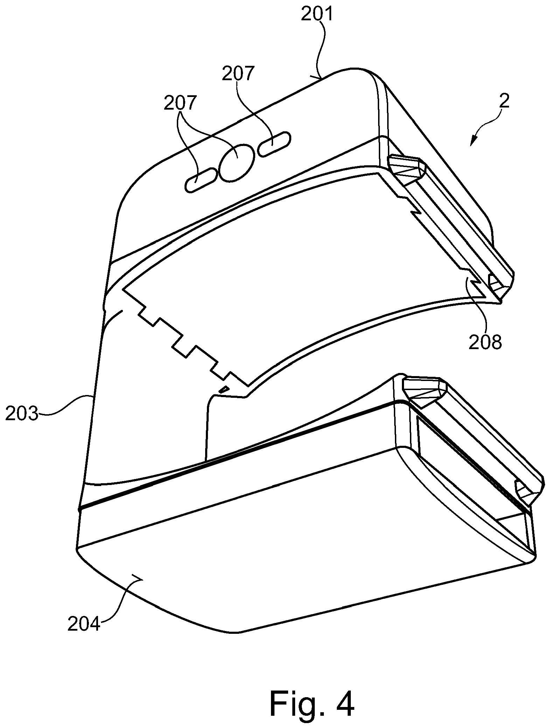

Fig. 3 zeigt in perspektivischer Darstellung eine konkrete gegenständliche Ausgestaltung eines erfindungsgemäßen Sensorarmbands 2. Die Darstellung der Fig. 3 und auch der Fig. 4 ist lediglich beispielhaft und das Sensorarmband kann auch anders aufgebaut sein. Das Sensorarmband umfasst einen oberen Gehäuseteil 201, in dem bis auf die RFID-Antenne des RFID-Lesegeräts RF die gesamte Sensorik des Armbands verbaut ist. Darüber hinaus beinhaltet der obere Gehäuseteil den Controller CO, den Summer BZ, den Vibrationsmotor VM sowie das WiFi-Modul WM und das Bluetooth-Modul BM. In dem oberen Gehäuseteil 201 ist ferner eine LED 202 verbaut, die den Betriebszustand des Sensorarmbands anzeigt. Ebenso befindet sich im oberen Gehäuseteil ein (primärer) Akku zur Stromversorgung der Komponenten des Sensorarmbands. Darüber hinaus sind an der Stirnseite des oberen Gehäuseteils drei Bedientasten 207 vorgesehen, über welche verschiedene Bedienaktionen des Benutzers, wie z.B. das Anschalten des Geräts sowie die Quittierung eines Kommissionierschritts, durchgeführt werden können.

Der obere Gehäuseteil ist über einen biegbaren Träger 203 mit dem unteren Gehäuseteil 204 verbunden. Im unteren Gehäuseteil 204 befindet sich die RFID-Antenne des RFID-Lesegeräts. Darüber hinaus ist ein zusätzlicher (sekundärer) Akku in diesem Gehäuseteil verbaut, der dann in Betrieb genommen wird, wenn der primäre Akku im oberen Gehäuseteil keinen Strom mehr liefert. Auf diese Weise wird die Betriebszeit des Sensorarmbands erhöht. Der Akku und die RFID-Antenne im unteren Gehäuseteil 204 sind über entsprechende Leitungen (nicht gezeigt) in dem Träger 203 an die Komponenten im oberen Gehäuseteil angebunden. Zur Entnahme des sekundären Akkus aus dem unteren Gehäuseteil 204 kann dieses Gehäuseteil über eine obere Abdeckung 206 geöffnet werden.

Über Schlitze an den rechten Rändern des oberen und unteren Gehäuseteils ist ein Klettband 205 befestigt, über welches das Sensorarmband am Handgelenk des Benutzers fixiert wird. Hierzu steckt der Benutzer seine Hand durch den Zwischenraum zwischen dem oberen Gehäuseteil 201 und dem unteren Gehäuseteil 204 und zieht das Klettband 205 zu. Dies führt zu einer leichten Verbiegung des Trägers 203 und hierdurch zu einer Fixierung des Sensorarmbands am Handgelenk.

Fig. 4 zeigt eine perspektivische Ansicht einer abgewandelten Ausführungsform eines Sensorarmbands, wobei aus Übersichtlichkeitsgründen das Klettband 205 weggelassen wurde. Das Sensorarmband der Fig. 4 entspricht dem Armband aus Fig. 3 mit dem einzigen Unterschied, dass die Bedientasten 207 auf einer Seitenfläche des oberen Gehäuseteils 201 angeordnet sind. Darüber hinaus wird ersichtlich, dass auf der Unterseite des oberen Gehäuseteils 201 eine Gehäuseabdeckung 208 vorgesehen ist, über welche der primäre Akku aus dem oberen Gehäuseteil entnommen werden kann.

Die im Vorangegangenen beschriebenen Ausführungsformen der Erfindung weisen eine Reihe von Vorteilen auf. Insbesondere wird durch die Verwendung eines Sensorarmbands eine verbesserte Erfassung von Kommissionierschritten eines manuellen Kommissioniervorgangs erreicht. Dies liegt daran, dass das Sensorarmband sehr nahe an die zu entnehmenden bzw. abzulegenden Gegenstände herangeführt wird, wodurch eine genauere Detektion der Entnahme bzw. der Ablage erreicht wird. Darüber hinaus hat die Erfindung den weiteren Vorteil, dass zusätzlich zu einem oder mehreren Sensorarmbändern eine Datenbrille genutzt wird. Über die Datenbrille können dem Benutzer Informationen zu dem Kommissioniervorgang unmittelbar in sein Sichtfeld eingeblendet werden.

## Patentansprüche

1. Verfahren zur technischen Unterstützung eines manuellen Kommissioniervorgangs, wobei im Rahmen des manuellen Kommissioniervorgangs ein Benutzer Kommissionierschritte ausführt, die dem Benutzer in der Form von Handlungsanweisungen ausgegeben werden, welche von einem Verwaltungsserver (1) zum Verwalten des manuellen Kommissioniervorgangs stammen und dort als digitale Daten hinterlegt sind, wobei ein oder mehrere Kommissionierschritte jeweils die Entnahme von einem oder mehreren Objekten (5) aus zumindest einem Lagerort durch den Benutzer spezifizieren und/oder wobei ein oder mehrere Kommissionierschritte jeweils das Ablegen von einem oder mehreren Objekten (5) an zumindest einem Lagerort durch den Benutzer spezifizieren, wobei dem Benutzer Informationen zum manuellen Kommissioniervorgang über eine Datenbrille (3) zumindest teilweise visuell ausgegeben werden, wobei die Handlungsanweisungen von dem Verwaltungsserver (1) an die Datenbrille übermittelt und dem Benutzer über die die Datenbrille (3) ausgegeben werden, und wobei dem Benutzer über die Datenbrille (3) ein Hinweis über die erfolgte Ausführung des jeweiligen Kommissionierschritts ausgegeben wird,
**dadurch gekennzeichnet, dass**
- eine Sensoreinrichtung (RF) in einer mobilen Einheit (2) aus einer Anzahl von mobilen Einheiten (2) Sensordaten erfasst, aus denen die erfolgte Ausführung eines jeweiligen Kommissionierschritts ermittelt wird, wobei eine jeweilige mobile Einheit (2) der Anzahl von mobilen Einheiten (2) über ein Befestigungsmittel der jeweiligen mobilen Einheit (2) an einem Arm oder an einer Hand oder an einem Fuß oder an einem Bein des Benutzers getragen wird;
- Daten, welche auf den Sensordaten der Sensoreinrichtung (RF) basieren, über eine drahtlose Datenschnittstelle (WM, BM) der mobilen Einheit (2) ausgesendet werden, woraufhin der Verwaltungsserver (1) über die erfolgte Ausführung des jeweiligen Kommissionierschritts informiert wird.

2. Verfahren nach Anspruch 1, **dadurch gekennzeichnet, dass** dem Benutzer über die Datenbrille (3) die aktuell durchzuführende Handlungsanweisung gleichzeitig mit einer oder mehreren darauf folgenden Handlungsanweisungen ausgegeben werden.

3. Verfahren nach Anspruch 1 oder 2, **dadurch gekennzeichnet, dass** dem Benutzer Informationen zum manuellen Kommissioniervorgang neben der Datenbrille (3) über eine taktile Ausgabeeinheit und/oder akustische Ausgabeeinheit und/oder visuelle Ausgabeeinheit in zumindest einer vom Benutzer mitgeführten und nicht zur Datenbrille (3) gehörigen Vorrichtung ausgegeben werden, insbesondere in zumindest einer mobilen Einheit (2) der Anzahl von mobilen Einheiten (2).

4. Verfahren nach einem der vorhergehenden Ansprüche, **dadurch gekennzeichnet, dass** die Datenbrille (3) drahtlos mit der mobilen Einheit (2), deren Sensoreinrichtung (RF) die Sensordaten erfasst, und/oder dem Verwaltungsserver (1) kommuniziert.

5. Verfahren nach einem der vorhergehenden Ansprüche, **dadurch gekennzeichnet, dass** dem Benutzer Informationen zum manuellen Kommissioniervorgang neben der Datenbrille (3) über eine stationäre Ausgabeeinheit in der Umgebung des Benutzers ausgegeben werden.

6. Verfahren nach einem der vorhergehenden Ansprüche, **dadurch gekennzeichnet, dass** die Anzahl von mobilen Einheiten (2) umfasst:
- zumindest eine mobile Einheit (2), die an einem Handgelenk des Benutzers befestigt ist; und/oder
- zumindest eine mobile Einheit (2), die an einem Fußgelenk des Benutzers befestigt ist.

7. Verfahren nach einem der vorhergehenden Ansprüche, **dadurch gekennzeichnet, dass** die mobile Einheit (2), deren Sensoreinrichtung (RF) die Sensordaten erfasst, die Daten, welche auf den Sensordaten der Sensoreinrichtung (RF) basieren, direkt unter Zwischenschaltung der drahtlosen Datenschnittstelle (BM, WM) an den Verwaltungsserver (1) übermittelt und/oder dass die mobile Einheit (2), deren Sensoreinrichtung (RF) die Sensordaten erfasst, die Daten, welche auf den Sensordaten der Sensoreinrichtung (RF) basieren, unter Zwischenschaltung der drahtlosen Datenschnittstelle (BM, WM) zunächst an eine vom Benutzer getragene Vorrichtung und insbesondere an die Datenbrille (3) übermittelt, welche anschließend Informationen an den Verwaltungsserver (1) übermittelt, basierend auf denen der Verwaltungsserver (1) über die erfolgte Ausführung des jeweiligen Kommissionierschritts informiert wird.

8. Verfahren nach einem der vorhergehenden Ansprüche, **dadurch gekennzeichnet, dass** die Sensoreinrichtung (RF) der mobilen Einheit (2) ein Lesegerät umfasst, welches als Sensordaten kontaktlos einen Code an dem oder den zu entnehmenden oder abzulegenden Objekten (5) oder am Lagerort der Entnahme oder der Ablage des oder der zu entnehmenden oder abzulegenden Objekte (5) ausliest, wobei das Lesegerät vorzugsweise ein Transponder-Lesegerät ist, das den Code aus einem RFID-Transponder ausliest, oder wobei das Lesegerät vorzugsweise ein optisches Lesegerät ist, welches einen visuellen Code ausliest.

9. Verfahren nach einem der vorhergehenden Ansprüche, **dadurch gekennzeichnet, dass** die Sensoreinrichtung (RF) der mobilen Einheit (2) eine Einrichtung umfasst, welche als Sensordaten kontaktlos eine Anzahl von Merkmalen, insbesondere umfassend die Kontur, des oder der zu entnehmenden oder abzulegenden Objekte (5) oder des Lagerorts der Entnahme oder der Ablage des oder der zu entnehmenden oder abzulegenden Objekte (5) erfasst, wobei die Einrichtung vorzugsweise eine Kamera ist.

10. Verfahren nach einem der vorhergehenden Ansprüche, **dadurch gekennzeichnet, dass** die Sensoreinrichtung (RF) eine inertiale Messeinheit und/oder eine optosensorische Messeinheit, insbesondere eine Kamera, und/oder einen Sensor zur Ortung über ein Funknetz und/oder einen Sensor zur satellitengestützten Ortung umfasst, wobei aus den Sensordaten der inertialen Messeinheit und/oder der optosensorischen Messeinheit und/oder des Sensors zur Ortung über ein Funknetz und/oder des Sensors zur satellitengestützten Ortung durch Abgleich mit einem digitalen Modell die erfolgte Ausführung des jeweiligen Kommissionierschritts ermittelt wird, wobei das digitale Modell die räumlichen Positionen von Lagerorten für Objekte (5) in dem räumlichen Bereich spezifiziert, in dem der Kommissioniervorgang stattfindet.

11. Verfahren nach einem der vorhergehenden Ansprüche, **dadurch gekennzeichnet, dass** erfasst wird, wenn eine erfolgte Ausführung eines jeweiligen Kommissionierschritts nicht mit dem anstehenden oder einem der anstehenden Kommissionierschritte gemäß den digitalen Daten der Handlungsanweisungen (1) übereinstimmt, woraufhin eine oder mehrere vorbestimmte Aktionen durchgeführt werden.

12. Verfahren nach einem der vorhergehenden Ansprüche, **dadurch gekennzeichnet, dass** mittels einer Detektionseinrichtung (SE1, SE2) in einer mobilen Einheit (2), insbesondere in der mobilen Einheit (2), deren Sensoreinrichtung (RF) die Sensordaten erfasst, Informationen betreffend die Bewegung und/oder Beschleunigung der mobilen Einheit (2), deren Sensoreinrichtung (RF) die Sensordaten erfasst, und/oder Informationen aus der Umgebung dieser mobilen Einheit (2) detektiert werden.

13. Verfahren nach Anspruch 12, **dadurch gekennzeichnet, dass** die Detektionseinrichtung (SE1, SE2) eine inertiale Messeinheit und/oder einen Schrittzähler und/oder einen Temperatursensor und/oder einen Luftfeuchtigkeitssensor und/oder einen Luftdrucksensor und/oder einen Lichtsensor zur Erfassung der Lichthelligkeit und/oder einen Sensor zur Ortung über ein Funknetz und/oder einen Sensor zur satellitengestützten Ortung und/oder eine Kamera umfasst.

14. Verfahren nach Anspruch 12 oder 13, **dadurch gekennzeichnet, dass** mittels der detektierten Informationen der Detektionseinrichtung (SE1, SE2) ermittelt wird, wenn der Abstand zwischen der mobilen Einheit (2), deren Sensoreinrichtung (RF) die Sensordaten erfasst, und dem Lagerort des anstehenden Kommissionierschritts gemäß den digitalen Daten der Handlungsanweisungen geringer als eine vorbestimmte Schwelle ist, wobei die Sensoreinrichtung (RF) immer nur für den Zeitraum aktiviert wird, solange dieser Abstand unter der vorbestimmten Schwelle bleibt.

15. Verfahren nach einem der Ansprüche 12 bis 14, **dadurch gekennzeichnet, dass** aus den detektierten Informationen der Detektionseinrichtung (SE1, SE2) der Abstand zwischen der mobilen Einheit (2), deren Sensoreinrichtung (RF) die Sensordaten erfasst, und dem Lagerort des anstehenden Kommissionierschritts gemäß den digitalen Daten der Handlungsanweisungen bestimmt wird und in Abhängigkeit von diesem Abstand die Reichweite der Sensoreinrichtung, welche eine kontaktlose Sensoreinrichtung ist, verändert wird, wobei die Reichweite in einem vorgegebenen Wertebereich des Abstands bei abnehmendem Abstand vorzugsweise herabgesetzt wird.

16. System zur technischen Unterstützung eines manuellen Kommissioniervorgangs, wobei im Rahmen des manuellen Kommissioniervorgangs ein Benutzer Kommissionierschritte ausführt, die dem Benutzer in der Form von Handlungsanweisungen ausgegeben werden, wobei ein oder mehrere Kommissionierschritte jeweils die Entnahme von einem oder mehreren Objekten (5) aus zumindest einem Lagerort durch den Benutzer spezifizieren und/oder wobei ein oder mehrere Kommissionierschritte jeweils das Ablegen von einem oder mehreren Objekten (5) an zumindest einem Lagerort durch den Benutzer spezifizieren, wobei das System umfasst:
- eine Datenbrille (3);
- einen Verwaltungsserver (1) zum Verwalten des manuellen Kommissioniervorgangs, wobei die Handlungsanweisungen von dem Verwaltungsserver (1) stammen und dort als digitale Daten hinterlegt sind;
wobei das System zur Durchführung eines Verfahrens ausgestaltet ist, bei dem dem Benutzer Informationen zum manuellen Kommissioniervorgang über die Datenbrille (3) zumindest teilweise visuell ausgegeben werden, die Handlungsanweisungen von dem Verwaltungsserver (1) an die Datenbrille übermittelt und dem Benutzer über die die Datenbrille (3) ausgegeben werden, und dem Benutzer über die Datenbrille (3) ein Hinweis über die erfolgte Ausführung des jeweiligen Kommissionierschritts ausgegeben wird;
**dadurch gekennzeichnet, dass**
das System eine Anzahl von mobilen Einheiten (2) umfasst, wobei eine jeweilige mobile Einheit (2) eine Sensoreinrichtung (RF) und ein Befestigungsmittel zur Befestigung der jeweiligen mobilen Einheit (2) an einem Arm und/oder an einer Hand und/oder an einem Fuß und/oder an einem Bein des Benutzers aufweist, und das System zur Durchführung des Verfahrens ausgestaltet ist, bei dem
- die Sensoreinrichtung (RF) in einer mobilen Einheit (2) aus der Anzahl von mobilen Einheiten (2) Sensordaten erfasst, aus denen die erfolgte Ausführung eines jeweiligen Kommissionierschritts ermittelt wird, wobei die mobile Einheit (2) über das Befestigungsmittel an einem Arm oder an einer Hand oder an einem Fuß oder an einem Bein des Benutzers getragen wird;
- Daten, welche auf den Sensordaten der Sensoreinrichtung (RF) basieren, über eine drahtlose Datenschnittstelle (WM, BM) der mobilen Einheit (2) ausgesendet werden, woraufhin der Verwaltungsserver (1) über die erfolgte Ausführung des jeweiligen Kommissionierschritts informiert

17. System nach Anspruch 16, **dadurch gekennzeichnet, dass** das System zur Durchführung eines Verfahrens nach einem der Ansprüche 2 bis 15 eingerichtet ist.

## Claims

1. A method for technically supporting a manual order picking process, wherein a user executes order picking steps, which are output to the user in the form of handling instructions, in the course of the manual order picking process, wherein said handling instructions originate from a management server (1) for managing the manual order picking process and are stored therein in the form of digital data, wherein one or more order picking steps respectively specify the removal of one or more objects (5) from at least one storage location by the user and/or wherein one or more order picking steps respectively specify the depositing of one or more objects (5) in at least one storage location by the user, wherein information on the manual order picking process is at least partially visually output to the user via data glasses (3), wherein the handling instructions are transmitted from the management server (1) to the data glasses and are output to the user via the data glasses (3), and wherein the user is provided with an indication that the respective order picking step has been carried out via the data glasses (3),
**characterized in that**
- a sensor device (RF) in a mobile unit (2) of a number of mobile units (2) acquires sensor data, based on which the effected execution of a respective order picking step is determined, wherein a respective mobile unit (2) of the number of mobile units (2) is carried on an arm or on a hand or on a foot or on a leg of the user with the aid of a fastening means of the respective mobile unit (2);
- data that is based on the sensor data of the sensor device (RF) is transmitted via a wireless data interface (WM, BM) of the mobile unit (2), whereupon the management server (1) is informed of the effected execution of the respective order picking step.

2. The method according to claim 1, **characterized in that** the handling instruction to be currently executed are output to the user by means of the data glasses (3) simultaneously with one or more ensuing handling instructions.

3. The method according to claim 1 or 2, **characterized in that** information on the manual order picking process is not only output to the user by means of the data glasses (3), but also a tactile output unit and/or acoustic output unit and/or visual output unit in at least one device that is carried along by the user and does not form part of the data glasses (3), particularly in at least one mobile unit (2) of the number of mobile units (2).

4. The method according to one of the preceding claims, **characterized in that** the data glasses (3) communicate wirelessly with the mobile unit (2), the sensor device (RF) of which acquires the sensor data, and/or with the management server (1).

5. The method according to one of the preceding claims, **characterized in that** information on the manual order picking process is not only output to the user by means of the data glasses (3), but also a stationary output unit in the environment of the user.

6. The method according to one of the preceding claims, **characterized in that** the number of mobile units (2) comprises:
- at least one mobile unit (2) that is fastened on a wrist of the user; and/or
- at least one mobile unit (2) that is fastened on an ankle of the user.

7. The method according to one of the preceding claims, **characterized in that** the mobile unit (2), the sensor device (RF) of which acquires the sensor data, directly transmits the data that is based on the sensor data of the sensor device (RF) to the management server (1) via the wireless data interface(BM, WM) and/or that the mobile unit (2), the sensor device (RF) of which acquires the sensor data, initially transmits the data that is based on the sensor data of the sensor device (RF) to a device carried by the user, particularly the data glasses (3), via the wireless interface (BM, WM), wherein the device carried by the user subsequently transmits information to the management server (1), based on which the management server (1) is informed of the effected execution of the respective order picking step.

8. The method according to one of the preceding claims, **characterized in that** the sensor device (RF) of the mobile unit (2) comprises a reader that reads out in a contactless manner sensor data in the form of a code on the object or objects (5) to be removed or deposited or at the removal or depositing location of the object or objects (5) to be removed or deposited, wherein the reader preferably is a transponder reader that reads out the code of an RFID transponder, or wherein the reader preferably is an optical scanner that scans a visual code.

9. The method according to one of the preceding claims, **characterized in that** the sensor device (RF) of the mobile unit (2) comprises a device that acquires in a contactless manner sensor data in the form of a number of characteristics, which particularly comprise the contour of the object or objects (5) to be removed or deposited or of the removal or depositing location of the object or objects (5) to be removed or deposited, wherein the device is preferably a camera.

10. The method according to one of the preceding claims, **characterized in that** the sensor device (RF) comprises an inertial measuring unit and/or an optosensory measuring unit, particularly a camera, and/or a sensor for localization via a wireless network and/or a sensor for satellite-assisted localization, wherein the effected execution of the respective order picking step is determined by matching the sensor data of the inertial measuring unit and/or the optosensory measuring unit and/or the sensor for localization via a wireless network and/or the sensor for satellite-assisted localization with a digital model, and wherein the digital model specifies the spatial positions of storage locations for objects (5) in the space, in which the order picking process takes place.

11. The method according to one of the preceding claims, **characterized in that** it is detected when an effected execution of a respective order picking step does not correspond to the pending order picking step or one of the pending order picking steps according to the digital data of the handling instructions (1), whereupon one or more predefined actions are carried out.

12. The method according to one of the preceding claims, **characterized in that** a detection device (SE1, SE2) in a mobile unit (2), particularly in the mobile unit (2), the sensor device (RF) of which acquires the sensor data, detects information concerning the motion and/or acceleration of the mobile unit (2), the sensor device (RF) of which acquires the sensor data, and/or information on the environment of this mobile unit (2).

13. The method according to claim 12, **characterized in that** the detection device (SE1, SE2) comprises an inertial measuring unit and/or a pedometer and/or a temperature sensor and/or a humidity sensor and/or an air pressure sensor and/or a light sensor for measuring the luminosity and/or a sensor for localization by means of a wireless network and/or a sensor for satellite-assisted localization and/or a camera.

14. The method according to claim 12 or 13, **characterized in that** the detected information of the detection device (SE1, SE2) is used for determining when the distance between the mobile unit (2), the sensor device (RF) of which acquires the sensor data, and the storage location of the pending order picking step according to the digital data of the handling instructions is shorter than a predefined threshold, wherein the sensor device (RF) is always activated only as long as this distance remains below the predefined threshold.

15. The method according to one of claims 12 to 14, **characterized in that** the distance between the mobile unit (2), the sensor device (RF) of which acquires the sensor data, and the storage location of the pending order picking step according to the digital data of the handling instructions is determined based on the detected information of the detection device (SE1, SE2) and the range of the sensor device, which is a contactless sensor device, is varied in dependence on this distance, wherein the range is preferably reduced in a predefined domain of the distance as the distance decreases.

16. A system for technically supporting a manual order picking process, wherein a user executes order picking steps, which are output to the user in the form of handling instructions, in the course of the manual order picking process, wherein one or more order picking steps respectively specify the removal of one or more objects (5) from at least one storage location by the user and/or wherein one or more order picking steps respectively specify the depositing of one or more objects (5) in at least one storage location by the user, wherein the system comprises:
- data glasses (3);
- a management server (1) for managing the manual order picking process, wherein the handling instructions originate from the management server (1) and are stored therein in the form of digital data;
wherein the system is designed for carrying out a method in which information on the manual order picking process is at least partially visually output to the user via the data glasses (3), the handling instructions are transmitted from the management server (1) to the data glasses and output to the user via the data glasses (3), and an indication is output to the user via the data glasses (3) that the respective order picking step has been carried out. **characterized in that** the system comprises a number of mobile units (2), wherein a respective mobile unit (2) comprises a sensor device (RF) and a fastening means for fastening the respective mobile unit (2) to an arm and/or to a hand and/or to a foot and/or to a leg of the user, and the system is arranged to carry out the method wherein
- the sensor device (RF) in a mobile unit (2) of the number of mobile units (2) acquires sensor data, based on which the effected execution of a respective order picking step is determined, wherein the mobile unit (2) is carried on an arm or on a hand or on a foot or on a leg of the user with the aid of the fastening means;
- data that is based on the sensor data of the sensor device (RF) is transmitted via a wireless data interface (WM, BM) of the mobile unit (2), whereupon the management server (1) is informed of the effected execution of the respective order picking step.

17. The system according to claim 16, **characterized in that** the system is configured for carrying out a method according to one of claims 2 to 15.

## Revendications

1. Procédé d'assistance technique d'un processus de préparation des commandes manuel, dans lequel un utilisateur exécute des étapes de préparation des commandes dans le cadre du processus de préparation des commandes manuel qui sont délivrées à l'utilisateur sous la forme d'instructions d'opération, qui proviennent d'un serveur de gestion (1) pour la gestion du processus de préparation des commandes manuel et y sont déposées en tant que données numériques, dans lequel une ou plusieurs étapes de préparation des commandes spécifient à chaque fois le prélèvement d'un ou plusieurs objets (5) d'au moins un lieu de stockage par l'utilisateur et/ou dans lequel une ou plusieurs étapes de préparation des commande spécifient à chaque fois le dépôt d'un ou plusieurs objets (5) à au moins un lieu de stockage par l'utilisateur, dans lequel des informations concernant le processus de préparation des commandes manuel sont délivrées à l'utilisateur au moins partiellement visuellement par le biais de lunettes intelligentes (3), dans lequel les instructions d'opération sont transmises du serveur de gestion (1) aux lunettes intelligentes et délivrée à l'utilisateur par le biais des lunettes intelligentes (3), et dans lequel une indication de l'exécution réussie de l'étape de préparation de commandes respective est délivrée à l'utilisateur par le biais des lunettes intelligentes (3),
**caractérisé en ce que**
- un dispositif de capteur (RF) détecte dans un module mobile (2) parmi un certain de modules mobiles (2) des données de capteur à partir desquelles l'exécution réussie d'une étape de préparation des commandes respective est déterminée, dans lequel un module mobile respectif (2) du nombre de modules mobiles (2) est porté par le biais d'un moyen de fixation du module mobile respectif (2) à un bras ou à une main ou à un pied ou à une jambe de l'utilisateur ;
- des données qui se basent sur les données de capteur du dispositif de capteur (RF) sont envoyées au module mobile (2) par le biais d'une interface de données sans fil (WM, BM), à la suite de quoi le serveur de gestion (1) est informé de l'exécution réussie de l'étape de préparation des commandes respective.

2. Procédé selon la revendication 1, **caractérisé en ce que** l'instruction d'opération à réaliser actuellement est délivrée à l'utilisateur par le biais des lunettes intelligentes (3) en même temps qu'une ou plusieurs instructions d'opération subséquentes.

3. Procédé selon la revendication 1 ou 2, **caractérisé en ce que** des informations concernant le processus de préparation des commandes manuel sont délivrées à l'utilisateur, outre aux lunettes intelligentes (3), par le biais d'un module de sortie tactile et/ou module de sortie acoustique et/ou module de sortie visuelle dans au moins un dispositif transporté par l'utilisateur et n'appartenant pas aux lunettes intelligentes (3), notamment dans au moins un module mobile (2) du nombre de modules mobiles (2).

4. Procédé selon une des revendications précédentes, **caractérisé en ce que** les lunettes intelligentes (3) communiquent sans fil avec le module mobile (2) dont le dispositif de capteur (RF) détecte les données de capteur et/ou le serveur de gestion (1).

5. Procédé selon une des revendications précédentes, **caractérisé en ce que** des informations concernant le processus de préparation des commandes manuel sont délivrées à l'utilisateur, outre aux lunettes intelligentes (3), par le biais d'un module de sortie stationnaire dans l'environnement de l'utilisateur.

6. Procédé selon une des revendications précédentes, **caractérisé en ce que** le nombre de modules mobiles (2) comprend :
- au moins un module mobile (2) qui est fixé à un poignet de l'utilisateur ; et/ou
- au moins un module mobile (2) qui est fixé à une cheville de l'utilisateur.

7. Procédé selon une des revendications précédentes, **caractérisé en ce que** le module mobile (2) dont le dispositif de capteur (RF) détecte les données de capteur transmet les données qui se basent sur les données de capteur du dispositif de capteur (RF) directement par interposition de l'interface de données sans fil (BM, WM) au serveur de gestion (1) et/ou que le module mobile (2) dont le dispositif de capteur (RF) détecte les données de capteur transmet les données qui se basent sur les données de capteur du dispositif de capteur (RF) par interposition de l'interface de données sans fil (BM, WM) d'abord à un dispositif porté par l'utilisateur et notamment aux lunettes intelligentes (3), qui transmet ensuite des informations au serveur de gestion (1), en se basant sur lesquelles le serveur de gestion (1) est informé de l'exécution réussie de l'étape de préparation des commandes respective.

8. Procédé selon une des revendications précédentes, **caractérisé en ce que** le dispositif de capteur (RF) du module mobile (2) comprend un lecteur qui lit en tant que données de capteur sans contact un code sur le ou les objets (5) à prélever ou déposer ou sur le lieu de stockage du prélèvement ou du dépôt du ou des objets (5) à prélever ou déposer, dans lequel le lecteur est de préférence un lecteur à transpondeur qui lit le code provenant d'un transpondeur RFID, ou dans lequel le lecteur est de préférence un lecteur optique qui lit un code visuel.

9. Procédé selon une des revendications précédentes, **caractérisé en ce que** le dispositif de capteur (RF) du module mobile (2) comprend un dispositif qui détecte en tant que données de capteur sans contact un certain nombre de caractéristiques, comprenant notamment le contour, du ou des objets (5) à prélever ou déposer ou du lieu de stockage du prélèvement ou du dépôt du ou des objets (5) à prélever ou déposer, dans lequel le dispositif est de préférence une caméra.

10. Procédé selon une des revendications précédentes, **caractérisé en ce que** le dispositif de capteur (RF) comprend un module de mesure inertielle et/ou un module de mesure optosensorielle, notamment une caméra, et/ou un capteur pour la localisation par le biais d'un réseau radio et/ou un capteur pour la géolocalisation, dans lequel l'exécution réussie de l'étape de préparation des commandes respective est déterminée à partir des données de capteur du module de mesure inertielle et/ou du module de mesure optosensorielle et/ou du capteur pour la localisation par le biais d'un réseau radio et/ou du capteur pour la géolocalisation par comparaison à un modèle numérique, dans lequel le modèle numérique spécifie les positions spatiales de lieux de stockage pour des objets (5) dans la région spatiale dans laquelle le processus de préparation des commandes a lieu.

11. Procédé selon une des revendications précédentes, **caractérisé en ce qu'**il est détecté à quel moment une exécution réussie d'une étape de préparation des commandes respective ne coïncide pas avec la ou une des étapes de préparation des commandes en attente conformément aux données numériques des instructions d'opération (1), à la suite de quoi une ou plusieurs actions prédéterminées sont menées.

12. Procédé selon une des revendications précédentes, **caractérisé en ce que** des informations concernant le mouvement et/ou l'accélération du module mobile (2) dont le dispositif de capteur (RF) détecte les données de capteur, et/ou des informations provenant de l'environnement de ce module mobile (2) sont détectées au moyen d'un dispositif de détection (SE1, SE2) dans un module mobile (2), notamment dans le module mobile (2) dont le dispositif de capteur (RF) détecte les données de capteur.

13. Procédé selon la revendication 12, **caractérisé en ce que** le dispositif de détection (SE1, SE2) comprend un module de mesure inertielle et/ou un compteur de pas et/ou un capteur de température et/ou un capteur d'humidité atmosphérique et/ou un capteur de pression atmosphérique et/ou un capteur lumineux pour la détection de la clarté lumineuse et/ou un capteur pour la localisation par le biais d'un réseau radio et/ou un capteur pour la géolocalisation et/ou une caméra.

14. Procédé selon la revendication 12 ou 13, **caractérisé en ce qu'**il est déterminé au moyen des informations détectées du dispositif de détection (SE1, SE2) à quel moment l'écart entre le module mobile (2) dont le dispositif de capteur (RF) détecte les données de capteur et le lieu de stockage de l'étape de préparation des commandes en attente conformément aux données numériques des instructions d'opération est inférieur à un seuil prédéterminé, dans lequel le dispositif de capteur (RF) n'est activé que pendant la période pendant laquelle cet écart reste en dessous du seuil prédéterminé.

15. Procédé selon une des revendications 12 à 14, **caractérisé en ce que** l'écart entre le module mobile (2) dont le dispositif de capteur (RF) détecte les données de capteur et le lieu de stockage de l'étape de préparation des commandes en attente conformément aux données numériques des instructions d'opération est déterminé à partir des informations détectées du dispositif de détection (SE1, SE2) et la portée du dispositif de capteur qui est un dispositif de capteur sans contact est modifiée en fonction de cet écart, dans lequel la portée est de préférence diminuée dans une plage de valeurs prédéfinie de l'écart en cas d'écart décroissant.

16. Système d'assistance technique d'un processus de préparation des commandes manuel, dans lequel un utilisateur exécute des étapes de préparation des commandes dans le cadre du processus de préparation des commandes manuel qui sont délivrées à l'utilisateur sous la forme d'instructions d'opération, dans lequel une ou plusieurs étapes de préparation des commandes spécifient à chaque fois le prélèvement d'un ou plusieurs objets (5) d'au moins un lieu de stockage par l'utilisateur et/ou dans lequel une ou plusieurs étapes de préparation des commande spécifient à chaque fois le dépôt d'un ou plusieurs objets (5) à au moins un lieu de stockage par l'utilisateur, dans lequel le système comprend :
- des lunettes intelligentes (3) ;
- un serveur de gestion (1) pour la gestion du processus de préparation des commandes manuel, dans lequel les instructions d'opération proviennent du serveur de gestion (1) et y sont déposées en tant que données numériques ;
dans lequel le système est configuré pour la réalisation d'un procédé, lors duquel des informations concernant le processus de préparation des commandes manuel sont délivrées à l'utilisateur au moins partiellement visuellement par le biais de lunettes intelligentes (3), les instructions d'opération sont transmises du serveur de gestion (1) aux lunettes intelligentes et délivrée à l'utilisateur par le biais des lunettes intelligentes (3), et une indication de l'exécution réussie de l'étape de préparation de commandes respective est délivrée à l'utilisateur par le biais des lunettes intelligentes (3) ;
**caractérisé en ce que**
le système comprend un certain nombre de modules mobiles (2), dans lequel un module mobile respectif (2) présente un dispositif de capteur (RF) et un moyen de fixation pour la fixation du module mobile respectif (2) à un bras et/ou à une main et/ou à un pied et/ou à une jambe de l'utilisateur, et le système est configuré pour la réalisation du procédé, lors duquel
- le dispositif de capteur (RF) détecte dans un module mobile (2) parmi le nombre de modules mobiles (2) des données de capteur à partir desquelles l'exécution réussie d'une étape de préparation des commandes respective est déterminée, dans lequel le module mobile (2) est porté par le biais du moyen de fixation à un bras ou à une main ou à un pied ou à une jambe de l'utilisateur ;
- des données qui se basent sur les données de capteur du dispositif de capteur (RF) sont envoyées au module mobile (2) par le biais d'une interface de données sans fil (WM, BM), à la suite de quoi le serveur de gestion (1) est informé de l'exécution réussie de l'étape de préparation des commandes respective.

17. Système selon la revendication 16, **caractérisé en ce que** le système est configuré pour la réalisation d'un procédé selon une des revendications 2 à 15.
